Europäisches Patentamt

European Patent Office

Office européen des brevets

(11) Veröffentlichungsnummer : **0 065 094**
**B1**

(12) **EUROPÄISCHE PATENTSCHRIFT**

(45) Veröffentlichungstag der Patentschrift :
21.03.84

(51) Int. Cl.³ : **B 01 D 46/04, B 01 D 46/24**

(21) Anmeldenummer : **82102543.4**

(22) Anmeldetag : **26.03.82**

(54) **Patronenfilter.**

(30) Priorität : **16.05.81 DE U 8114532**

(43) Veröffentlichungstag der Anmeldung :
**24.11.82 Patentblatt 82/47**

(45) Bekanntmachung des Hinweises auf die Patenterteilung : **21.03.84 Patentblatt 84/12**

(84) Benannte Vertragsstaaten :
**AT BE CH DE FR GB LI NL SE**

(56) Entgegenhaltungen :
**EP-A- 0 027 038**

(73) Patentinhaber : **VENTILATORENFABRIK OELDE
GMBH**
**Robert-Schumann-Ring**
**D-4740 Oelde (DE)**

(72) Erfinder : **Kreft, Rolf**
**Alleestrasse 11**
**D-4720 Beckum (DE)**

(74) Vertreter : **Stracke, Alexander, Dipl.-Ing. et al**
**Patentanwälte Dipl.-Ing. Loesenbeck Dipl.-Ing.
Stracke Jöllenbecker Strasse 164 Postfach 5605**
**D-4800 Bielefeld 1 (DE)**

Patronenfilter

Die vorliegende Erfindung bezieht sich auf ein Patronenfilter mit einer im Inneren angeordneten Reinigungsdüse.

Es sind Filtervorrichtungen bekannt, bei denen Patronenfilter zur Reinigung von staubhaltiger Luft verwendet werden. Während des Filtervorganges wird die zu reinigende Luft von außen an das Patronenfilter herangeführt, durchdringt das Filtermaterial und wird im gereinigten Zustand vorzugsweise nach oben abgeleitet. Die Verunreinigungen bleiben an den Außenflächen des Patronenfilters hängen oder dringen geringfügig in das Patronenfilter ein. Nach längerem Betrieb ist es erforderlich, das Patronenfilter zu reinigen, was dadurch geschieht, daß von innen her Druckluft auf das Patronenfilter aufgebracht wird, so daß die außen anhängenden Staubpartikel oder sonstige Verunreinigungen abgelöst werden. Die abgelösten Verunreinigungen werden dann in einem Staubbehälter aufgefangen.

Bei den bekannten Patronenfiltern der gattungsgemäßen Art besteht die Reinigungsdüse aus einem Rohr, welches an einem zentral in das Patronenfilter eingeführten und drehbar gelagerten Luftzufuhrrohr befestigt ist. Die Verbindung zwischen Luftzufuhrrohr und Reinigungsdüse ist durch zwei Rohrstutzen bewirkt, durch die auch die zugeführte Druckluft vom zentral angeordneten Luftzufuhrrohr in die Reinigungsdüse gelangt. Die Reinigungsdüse ist mit einer über ihre Länge verteilten Lochreihe versehen, durch die die Reinigungsluft an die Innenwand des Patronenfilters geblasen wird. Durch Rückstau der Reinigungsluft an der Patroneninnenwand wird das aus Luftzufuhrrohr und daran angeschlossener Reinigungsdüse bestehende flügelartige Gebilde in Rotation versetzt, so daß die Reinigungsdüse die gesamte Mantelinnenfläche des Patronenfilters bestreichen kann. Zum Massenausgleich ist auf der der Reinigungsdüse abgewandten Seite des Luftzufuhrrohres ein rahmenartiges Gegengewicht befestigt.

Die vorstehend beschriebene Konstruktion weist den Nachteil auf, daß bei hohen Drehzahlen relativ große Massenkräfte auftreten.

Da die Reinigungseinrichtung durch den Rückstau der zugeführten Druckluft angetrieben wird und um so schneller rotiert, je höher der Druck ist, kann mit der bekannten Reinigungseinrichtung nur mit relativ niedrigem Druck von ca. 2 bar gearbeitet werden, da anderenfalls die Drehzahl zu hoch wird. Der relativ niedrige Reinigungsdruck wiederum verursacht verhältnismäßig lange Reinigungszeiten und macht es außerdem erforderlich, daß die Filtereinrichtung in ihrer Gesamtheit während des Reinigungsvorganges außer Betrieb gesetzt wird oder über Klappen der Reinigungsbereich abgesperrt wird.

Der vorliegenden Erfindung liegt die Aufgabe zugrunde, ein Patronenfilter der gattungsgemäßen Art mit einer Reinigungsdüse auszustatten, die eine Reinigung mit sehr hoch komprimierter Druckluft ermöglicht.

Die Lösung dieser Aufgabe besteht erfindungsgemäß darin, daß die Reinigungsdüse aus einem Vierkantrohr besteht, welches an zwei einander gegenüberliegenden Wandungen mit versetzt zueinander angeordneten Lochreihen versehen ist, an einer Stirnseite geschlossen und im Bereich seiner offenen Stirnseite drehbar in einer Halterung gelagert und mit einem Druckluftanschlußstück versehen ist.

Die neuartige Reinigungsdüse bietet eine Vielzahl von Vorteilen.

Einerseits sind die Abmessungen der Reinigungsdüse sehr gering, so daß bei der Rotation, die durch die aus den Lochreihen austretende Druckluft verursacht wird, nur geringe Fliehkräfte entstehen. Dadurch wird es möglich, mit sehr hohen Drücken zu arbeiten, was sich auf die Reinigungszeiten sehr günstig auswirkt.

Andererseits ist es möglich, die Reinigung eines Patronenfilters durchzuführen, ohne den Filterprozeß zu unterbrechen, da üblicherweise mehrere Patronenfilter in einer Filterkammer zusammengefaßt werden und somit eine sukzessive Reinigung der einzelnen Patronenfilter ohne Betriebsunterbrechung durchgeführt werden kann.

Ein Ausführungsbeispiel der Erfindung ist in den beigefügten Zeichnungen dargestellt und wird im folgenden näher beschrieben.

Es zeigen :

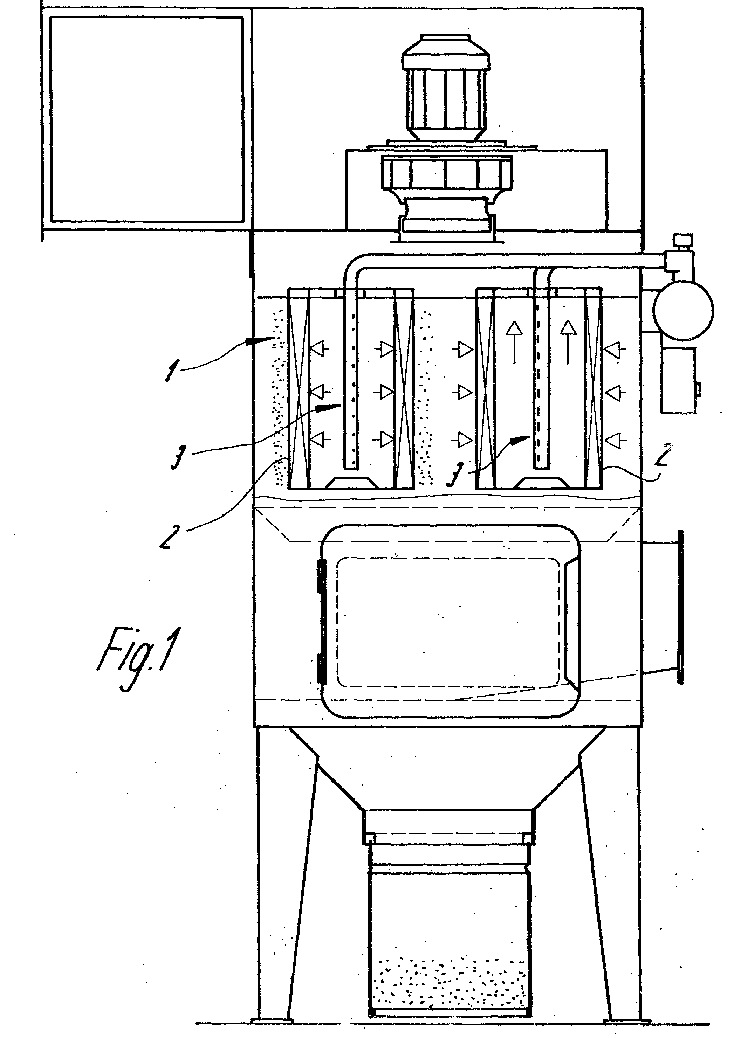

Figur 1 eine schematisch dargestellte Ansicht einer Filtervorrichtung mit mehreren Patronenfiltern,

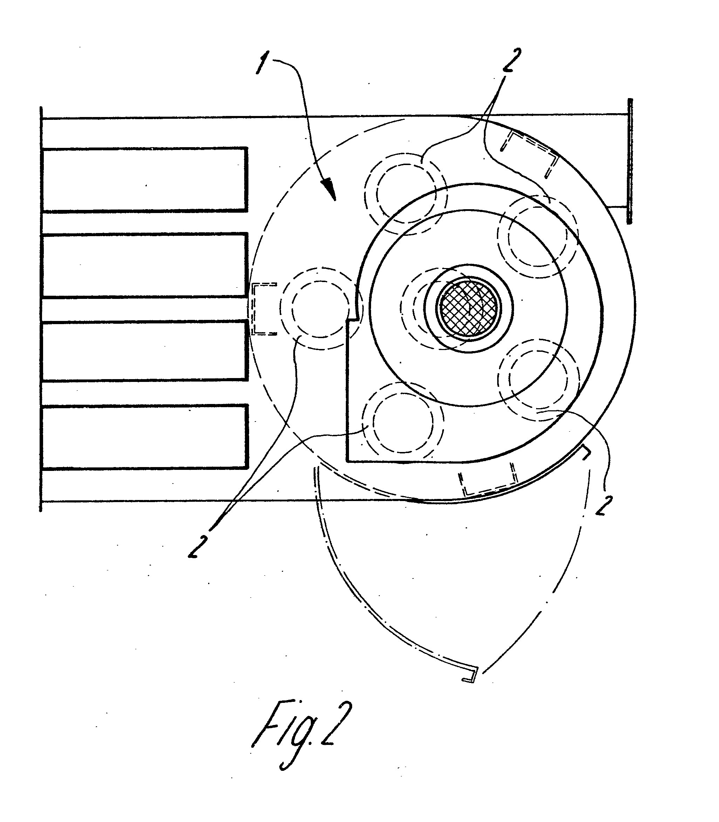

Figur 2 eine Draufsicht auf die Vorrichtung gemäß Fig. 1,

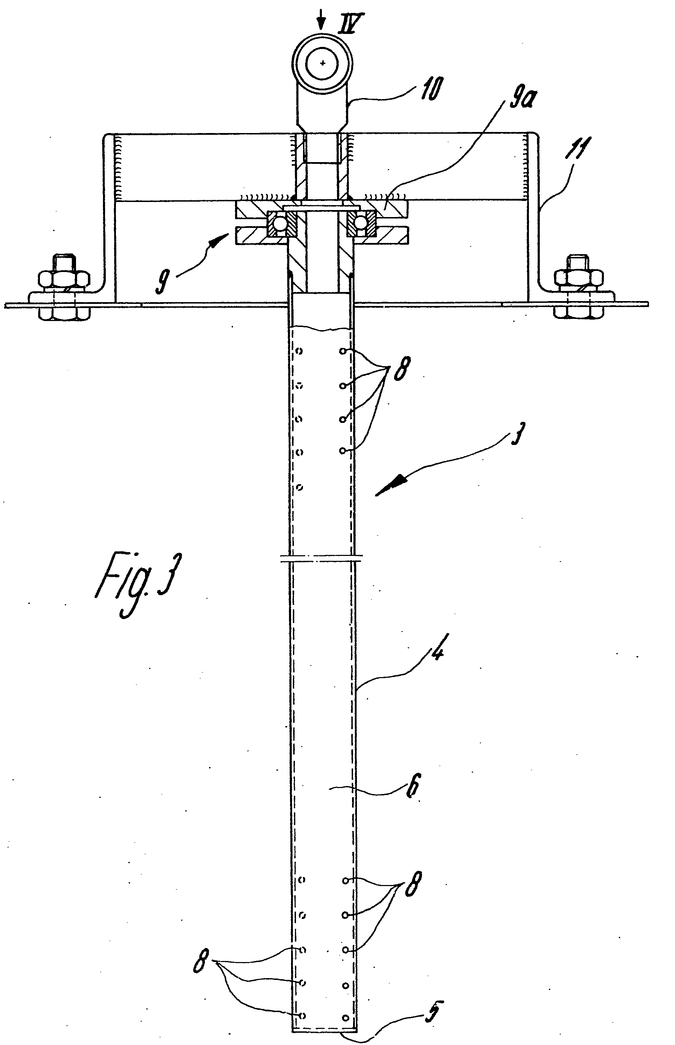

Figur 3 eine Reinigungsdüse für ein Patronenfilter,

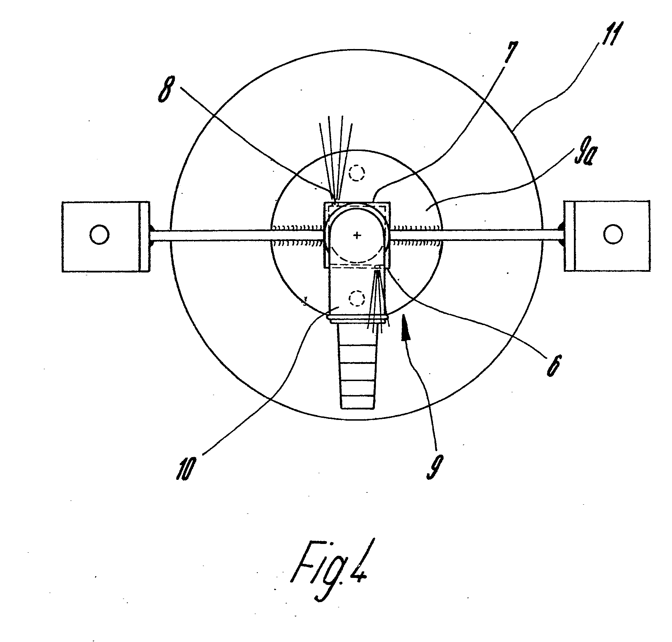

Figur 4 eine Ansicht in Richtung des Pfeiles IV in Fig. 3.

Die Reinigungsdüse 3 besteht im wesentlichen aus einem Vierkantrohr 4, welches an seiner unteren Stirnseite 5 geschlossen ist und an zwei gegenüberliegenden Wandungen 6 und 7 mit Lochreihen 8 versehen ist, die zueinander versetzt angeordnet sind. Das Vierkantrohr 4, welches in seinem oberen Endbereich offen ist, ist in einem Lager 9 gehalten.

Am feststehenden Lagerteil 9a ist ein Druckluftanschlußstück 10 angeschlossen, durch welches Druckluft ins Innere des Vierkantrohres 4 gefördert werden kann.

Das Lager 9 ist in einer Halterung 11 angebracht, die zur Befestigung der gesamten Reinigungsdüse 3 an einem Patronenfilter 2 dient.

Durch Zufuhr von Druckluft ins Innere des Vierkantrohres 4 und durch den Luftaustritt durch die Lochreihen 8, die zueinander versetzt angeordnet sind, entsteht ein Kräftepaar, welches das Vierkantrohr 4 in Rotation versetzt. Die Drehzahl wird um so höher sein, je höher die Druckluft komprimiert ist. Aufgrund der kleinen Abmessungen des Vierkantrohres 4 entstehen auch bei hohen Drehzahlen nur unwesentliche Fliehkräfte, so daß einerseits eine einfache Lagerung des Vierkantrohres ausreicht und andererseits hohe Drehzahlen ohne weiteres zugelassen werden können. Dies bedeutet praktisch, daß durchaus mit Druckluft im Bereich von 6-10 bar gearbeitet werden kann. Daraus ergibt sich der außerordentliche Vorteil, daß die Reinigung eines Patronenfilters innerhalb kurzer Zeiten durchführbar ist.

**Ansprüche**

1. Patronenfilter, mit einer im Inneren angeordneten Reinigungsdüse, dadurch gekennzeichnet, daß die Reinigungsdüse (3) aus einem Vierkantrohr (4) besteht, welches an zwei einander gegenüberliegenden Wandungen (6, 7) mit versetzt zueinander angeordneten Lochreihen versehen ist, an einer Stirnseite geschlossen und im Bereich seiner offenen Stirnseite drehbar in einer Halterung (11) gelagert und mit einem Druckluftanschlußstück (10) versehen ist.

2. Patronenfilter nach Anspruch 1, dadurch gekennzeichnet, daß das Vierkantrohr (4) in einem Lager (9) drehbar gelagert ist, wobei am ortsfesten Lagerteil (9a) das Druckluftanschlußstück (10) angeschlossen ist.

**Claims**

1. A cartridge filter having a cleaning nozzle which is disposed in the interior thereof, characterised in that the cleaning nozzle (3) comprises a square tube (4) which is provided at two mutually oppositely disposed walls (6, 7) with mutually displaced rows of holes, which is closed at one end, which is mounted rotatably in a holding means (11) in the region of its open end, and which is provided with a compressed air connecting member (10).

2. A cartridge filter according to claim 1, characterised in that the square tube (1) is mounted rotatably in a bearing (9), the compressed air connection member (10) being connected to the stationary bearing member (9a).

**Revendications**

1. Filtre à cartouche intérieurement équipé d'une buse de nettoyage, caractérisé en ce que la buse de nettoyage (3) est un tube quadrangulaire (4) qui est muni sur deux parois opposées (6, 7) de séries de trous décalées les unes par rapport aux autres, est fermé à l'une de ses parties en bout, est monté rotatif dans un support (11) dans la zone de sa partie en bout ouverte et est muni d'une pièce de raccordement d'air comprimé (10).

2. Filtre à cartouche selon la revendication 1, caractérisé en ce que le tube quadrangulaire (4) est monté rotatif dans un palier (9), à la partie fixe (9a) duquel est raccordée la pièce de raccordement d'air comprimé (10).

Fig.1

Fig.2

Fig. 3

Fig. 4